# EUROPEAN PATENT APPLICATION

(11) **EP 4 629 052 A1**
(43) Date of publication of application: **08.10.2025**
(21) Application number: 24741151.5
(22) Date of filing: 04.01.2024
(51) Int. Cl.: G06F 3/14, G06F 16/29

(54) **METHOD AND APPARATUS FOR DISPLAYING ELECTRONIC PRICE TAG**

(30) Priority: 10.01.2023 CN 202310035755
(71) Applicant: HEMA (CHINA) CO., LTD., Shanghai 200131 (CN)
(72) Inventor: ZHAO, Zhenyu, Shanghai 200127 (CN); SONG, Enliang, Shanghai 200127 (CN); WU, Yimin, Shanghai 200127 (CN)
(74) Representative: Brevalex
(86) International application number: PCT/CN2024/070629
(87) International publication number: WO 2024/149152

(57) **Abstract**

A method and apparatus for displaying an electronic price tag. The method for displaying an electronic price tag comprises: setting time synchronization information for an electronic price tag group, and acquiring location information of at least two electronic price tags; determining target display content of the at least two electronic price tags, and determining content to be displayed of a first electronic price tag according to the target display content and the location information, wherein the first electronic price tag is any electronic price tag in the electronic price tag group; determining a preset display mode of the electronic price tag group, and determining a target display moment of the first electronic price tag according to the preset display mode and the location information; and displaying the content to be displayed of the first electronic price tag at the target display moment on the basis of the time synchronization information. A target display moment of content to be displayed of each electronic price tag is obtained, and the content to be displayed of the electronic price tag is displayed at the target display moment, such that at least two electronic price tags can achieve a linkage effect, thereby improving the functionality of the electronic price tags.

## Description

The present application claims priority to Chinese Patent Application No. 202310035755.4, filed with the China Patent Office on January 10, 2023, and titled "METHOD AND APPARATUS FOR DISPLAYING ELECTRONIC PRICE TAG", which is incorporated herein by reference in its entirety.

### TECHNICAL FIELD

Embodiments of this specification relate to the field of computer technology, and in particular, to a method for displaying an electronic price tag.

### BACKGROUND

Electronic price tag, also referred to as electronic shelf label (ESL), is an electronic display apparatus with information sending and receiving functions, which is mainly applied in supermarkets, convenience stores, pharmacies and other electronic tags that display price information. As an electronic display apparatus that is placed on a shelf and may replace a traditional paper price tag, each electronic shelf label is connected with a computer database of a shopping mall over a wired or wireless network, and displays the latest commodity information through a screen on the electronic shelf label. In fact, the electronic shelf label has successfully incorporated the shelf into a computer program, getting rid of the condition of manually replacing price labels, and achieving the price consistency between checkout counters and the shelf.

Current electronic price tags generally serve as a tool for conveying prices, with relatively single function, and a better solution is urgently needed.

### SUMMARY

In view of this, embodiments of this specification provide a method for displaying an electronic price tag. One or more embodiments of this specification also relate to an apparatus for displaying an electronic price tag, a computing device, a computer-readable storage medium, and a computer program, so as to solve the technical defects in the related technologies.

According to a first aspect of the embodiments of this specification, there is provided a method for displaying an electronic price tag, applied to an electronic price tag group including at least two electronic price tags, the method including: setting time synchronization information for the electronic price tag group, and acquiring location information of the at least two electronic price tags; determining target display content of the at least two electronic price tags, and determining content to be displayed of a first electronic price tag according to the target display content and the location information, wherein the first electronic price tag is any electronic price tag in the electronic price tag group; determining a preset display mode of the electronic price tag group, and determining a target display moment of the first electronic price tag according to the preset display mode and location information of the first electronic price tag; and displaying the content to be displayed of the first electronic price tag at the target display moment on the basis of the time synchronization information.

According to a second aspect of the embodiments of this specification, there is provided an apparatus for displaying an electronic price tag, applied to an electronic price tag group including at least two electronic price tags, the apparatus including: an information acquisition module configured to set time synchronization information for the electronic price tag group, and acquire location information of the at least two electronic price tags; a content determination module configured to determine target display content of the at least two electronic price tags, and determine content to be displayed of a first electronic price tag according to the target display content and the location information, wherein the first electronic price tag is any electronic price tag in the electronic price tag group; a moment determination module configured to determine a preset display mode of the electronic price tag group, and determine a target display moment of the first electronic price tag according to the preset display mode and location information of the first electronic price tag; and a content display module configured to display the content to be displayed of the first electronic price tag at the target display moment on the basis of the time synchronization information.

According to a third aspect of the embodiments of this specification, there is provided a computing device, including: a memory for storing computer-executable instructions; and a processor for executing the computer-executable instructions that, when executed by the processor, implement the steps of the above method for displaying the electronic price tag.

According to a fourth aspect of the embodiments of this specification, there is provided a computer-readable storage medium, which stores computer-executable instructions that, when executed by a processor, implement the steps of the above method for displaying the electronic price tag.

According to a fifth aspect of the embodiments of this specification, there is provided a computer program, wherein the computer program, when executed in a computer, causes the computer to execute the steps of the above method for displaying the electronic price.

### BRIEF DESCRIPTION OF THE DRAWINGS

In the drawings, unless otherwise specified, the same reference numerals refer to the same or similar parts or elements throughout the drawings. The drawings may not be necessarily drawn to scale. It should be understood that these drawings only depict some implementations disclosed according to the present application, and should not be considered as limiting the scope of the present application.
FIG. 1 shows a schematic diagram of a scenario of a method for displaying an electronic price tag provided in an embodiment of this specification.
FIG. 2A shows a flow chart of a method for displaying an electronic price tag provided in an embodiment of this specification.
FIG. 2B shows a schematic diagram of an electronic price tag group in the method for displaying an electronic price tag provided in an embodiment of this specification.
FIG. 2C shows a diagram of a display effect change of an electronic price tag in the method for displaying an electronic price tag provided in an embodiment of this specification.
FIG. 3 shows a flow chart of a processing process of a method for displaying an electronic price tag provided in an embodiment of this specification.
FIG. 4 shows a schematic structural diagram of an apparatus for displaying an electronic price tag provided in an embodiment of this specification.
FIG. 5 shows a structural block diagram of a computing device provided in an embodiment of this specification.

### DETAILED DESCRIPTION

In order to make the objectives, technical solutions and advantages of the present application clearer, the technical solutions of the present application will be clearly and completely described below in conjunction with specific embodiments of the present application and the corresponding drawings. Obviously, the described embodiments are only some of the embodiments of the present application, rather than all of the embodiments. Based on the embodiments in the present application, all other embodiments obtained by those of ordinary skill in the art without making creative labor shall fall within the scope of protection of the present application.

Many specific details will be set forth in the following description to facilitate a thorough understanding of this specification. However, this specification can be implemented in many other manners different from those described here, and those skilled in the art may make similar generalization without departing from the connotation of this specification. Therefore, this specification is not limited by the specific implementations disclosed below.

The terms used in one or more embodiments of this specification are only for the purpose of describing particular embodiments, and are not intended to limit one or more embodiments of this specification. Singular forms of "a/an", "the" and "this" used in one or more embodiments of this specification and the appended claims are also intended to include plural forms, unless otherwise clearly indicated in the context. It should also be understood that the term "and/or" used in one or more embodiments of this specification refers to and includes any or all possible combinations of one or more associated listed items.

It should be understood that although various information may be described employing terms such as first and second in one or more embodiments of this specification, such information should not be limited by these terms. These terms are only used to distinguish information of the same type from each other. For example, without departing from the scope of one or more embodiments of this specification, a first one may also be referred to as a second one, and similarly, the second one may also be referred to as the first one. Depending on the context, the word "if" as used here may be interpreted as "as" or "when" or "determining... in response to...".

First, nouns and terms involved in one or more embodiments of this specification will be explained.

Electronic price tag, also referred to as electronic shelf label (ESL), is an electronic display apparatus with information sending and receiving functions, which is mainly applied in supermarkets, convenience stores, pharmacies and other electronic tags that display price information. As an electronic display apparatus that is placed on a shelf and may replace a traditional paper price tag, each electronic shelf label is connected with a computer database of a shopping mall over a wired or wireless network, and displays the latest commodity information through a screen on the electronic shelf label.

Coordinated Universal Time is also referred to as World Uniform Time, World Standard Time, or International Coordinated Time. Since the abbreviations in English (CUT) and French (TUC) are different, as a compromise, it is abbreviated as UTC.

In this specification, there is provided a method for displaying an electronic price tag. This specification also relates to an apparatus for displaying an electronic price tag, a computing device, and a computer-readable storage medium, which will be explained in detail in the following embodiments one by one.

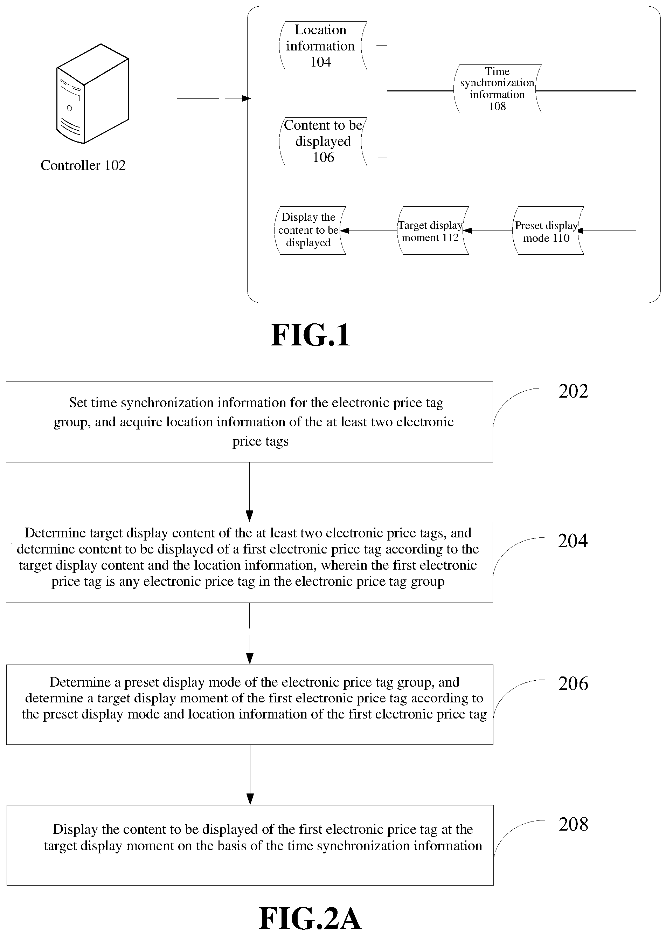

Referring to FIG. 1, it shows a schematic diagram of a scenario of a method for displaying an electronic price tag provided in an embodiment of this specification.

In a scenario such as a supermarket or a store, in a process of presenting a commodity on a shelf, a guide rail is installed on the shelf where the commodity is located, and an electronic price tag is configured on the guide rail. In some cases, in order to highlight an electronic price tag of a certain commodity, an effect can be presented through an electronic price tag group on the shelf. In an embodiment, time synchronization information 108 can be set for the electronic price tag group by a controller 102 that controls all the electronic price tags, and content to be displayed 106 and location information 104 of a first electronic price tag in the electronic price tag group can be acquired. Furthermore, a preset display mode 110 of the electronic price tag group can be determined according to a mode set by a clerk, and a target display moment 112 of the first electronic price tag in the electronic price tag group can be determined according to the preset display mode 110 and the location information 104, and the content to be displayed 106 of the first electronic price tag in the electronic price tag group can be displayed at the target display moment 112 on the basis of the time synchronization information 108. In this way, by switching screens of all the electronic price tags in the electronic price tag group, an overall linkage effect is achieved, so as to give prominence to the electronic price tag of the certain commodity.

In the method for displaying an electronic price tag of the embodiment of this specification, by determining a display mode of the electronic price tag group and location information of each electronic price tag in the electronic price tag group, a target display moment of content to be displayed of each electronic price tag can be obtained, and corresponding display content of the electronic price tag can be displayed at the target display moment, such that at least two electronic price tags can achieve a linkage effect, thereby improving the functionality of the electronic price tags.

FIG. 2A shows a flow chart of a method for displaying an electronic price tag provided in an embodiment of this specification, and this method is applied to an electronic price tag group including at least two electronic price tags, which specifically includes the following steps.

At step 202, setting time synchronization information for the electronic price tag group, and acquiring location information of the at least two electronic price tags.

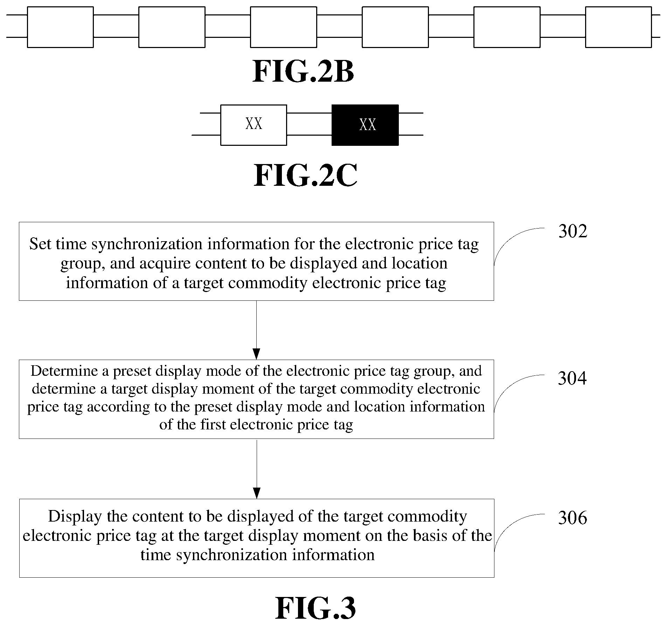

In an embodiment, the electronic price tag group may be understood as a group of electronic price tags consisting of at least two electronic price tags. For example, referring to FIG. 2B, which is a schematic diagram of an electronic price tag group in the method for displaying an electronic price tag provided in an embodiment of this specification, all the electronic price tags on a same guide rail may be in one group. The above guide rail refers to a guide rail for installing the electronic price tags, and locations of the electronic price tags can be moved on the guide rail.

The time synchronization information may be information used for synchronizing time, such as unified time information received by a unified time server, which may be referred to as time synchronization information. The location information may be information of a relative location of an electronic price tag in the electronic price tag group. For example, with an electronic price tag A centered, location information of an electronic price tag B is 1 meter, that is, a distance between electronic price tag B and electronic price tag A is 1 meter.

In practical applications, time of each electronic price tag can be synchronized, and a location of the electronic price tag can also be determined.

For example, a first guide rail is configured on a shelf, on which an electronic price tag A, an electronic price tag B and an electronic price tag C are configured, and time synchronization information is set for electronic price tag A, electronic price tag B and electronic price tag C as current time: X hours, X minutes, X seconds. Location information of electronic price tag A, electronic price tag B and electronic price tag C is acquired, with the location information of electronic price tag A being 0.5 meter, the location information of electronic price tag B being 1 meter, and the location information of electronic price tag C being 1.5 meters.

In the embodiment of this specification, time synchronization is performed in advance, and the location information and the content to be displayed of electronic price tag A are acquired, such that presentation of the display content can be performed according to time in subsequent steps, thereby achieving the effect of switching the display content.

In an implementation, prior to acquiring the location of the electronic price tag, a location of the electronic price tag needs to be obtained first, which is specifically implemented as below.

In an implementable manner, prior to acquiring the location information of the at least two electronic price tags, the method includes: acquiring a target voltage value of the first electronic price tag, wherein the target voltage value is a voltage value of the first electronic price tag on a guide rail; and determining location information of the first electronic price tag according to an initial voltage value and the target voltage value, wherein the initial voltage value is a voltage value applied to the guide rail.

The target voltage value may be a voltage value at a location where the electronic price tag is located, and the initial voltage value may be a voltage value accessed from an end of the guide rail. For example, the initial voltage value is 5 volts, and the target voltage value is 3 volts.

In practical applications, a relative location of the electronic price tag on the guide rail can be determined according to the degree of voltage attenuation.

For example, if a voltage value of electronic price tag A is 3 volts, and a voltage value applied on the guide rail is 5 volts at the beginning, which attenuates by 1 volt for every 1 meter passed, then it can be determined that a relative location of electronic price tag A is 2 meters.

In the embodiment of this specification, the location information of the electronic price tag is determined by voltage, which improves the precision of location determination, and simplifies the way to position the electronic price tag.

Time synchronization of a plurality of electronic price tags also needs to be determined according to a same time synchronization server, which is specifically implemented as below.

In an implementable manner, setting the time synchronization information for the electronic price tag group includes: receiving time broadcast data, and acquiring time information from the time broadcast data; and setting time synchronization information for the electronic price tag group according to the time information.

The time broadcast data may be time synchronization data of a Bluetooth gateway, and the time information may be time information carried in the time synchronization data.

In practical applications, time of the Bluetooth gateway is calibrated by periodically invoking an NTP server to acquire real-time time. An update cycle is set to run once every 2 hours. The local time is not updated when an error is less than 1 second. Additionally, the time synchronization of the electronic price tag is made according to addition of UTC time information to a broadcast frame by the Bluetooth gateway, using 4 bytes, totaling 32 bits of data, and additional carrying of millisecond time information with a precision of 0.01 second, occupying 1 byte, with a value of the millisecond time information ranging from 0 to 99.

For example, an electronic price tag A, an electronic price tag B and an electronic price tag C are configured on a first guide rail, time synchronization data of the Bluetooth gateway is received from a Bluetooth signal, UTC time information is determined from the time synchronization data, and time synchronization information is set, on the basis of the UTC time information, for electronic price tag A, electronic price tag B and electronic price tag C as current time: X hours, X minutes and X seconds.

In the embodiment of this specification, the time synchronization is performed by the Bluetooth gateway, which not only can reduce power consumption of time synchronization, but also can perform precise time synchronization, thereby improving the effect of time synchronization.

In order to reduce the number of time synchronizations, a time difference between the electronic price tag and the Bluetooth gateway can be judged, and in the case where the time difference is less than a set time difference threshold, no update is performed, which is specifically implemented as below.

In an implementable manner, setting the time synchronization information for the electronic price tag group according to the time information includes: determining a time difference according to the time information and the time synchronization information, and setting the time information as time synchronization information of the electronic price tag group in the case where the time difference is greater than or equal to a preset threshold.

The time difference may be understood as a difference between a time value in the electronic price tag and a time value of the Bluetooth gateway. For example, a time difference between time of the Bluetooth gateway and time of the electronic price tag is 0.1 millisecond.

In practical applications, when an error is less than 0.05 second, local time of the electronic price tag may not be updated because it is difficult for the human eye to distinguish an image change within this time difference.

For example, an electronic price tag A, an electronic price tag B and an electronic price tag C are configured on a first guide rail, time synchronization data of the Bluetooth gateway is received from a Bluetooth signal, UTC time information is determined from the time synchronization data, and a difference from local time of electronic price tag A, electronic price tag B and electronic price tag C is calculated on the basis of the UTC time information. If the difference is greater than 0.05 second, then the time synchronization information is set, on the basis of the UTC time information, for electronic price tag A, electronic price tag B and electronic price tag C as current time: X hours, X minutes, X seconds.

In the embodiment of this specification, the time synchronization is performed by the Bluetooth gateway, and the time of the electronic price tag is not updated in the case where the difference between the time value in the electronic price tag and the time value of the Bluetooth gateway is less than the set threshold, which can reduce the number of updates, thereby reducing power consumption.

At step 204, determining target display content of the at least two electronic price tags, and determining content to be displayed of a first electronic price tag according to the target display content and the location information, wherein the first electronic price tag is any electronic price tag in the electronic price tag group.

The target display content may be the overall display content of the electronic price tag group. For example, all the electronic price tags in the electronic price tag group display one picture. Correspondingly, the content to be displayed of the first electronic price tag may be a part of the picture.

In practical applications, combined contents to be displayed of all electronic price tags in a group can be determined first, and then content to be displayed of each electronic price tag can be determined according to a location of the electronic price tag in the electronic price tag group.

For example, a first guide rail is configured on a shelf, on which an electronic price tag A, an electronic price tag B and an electronic price tag C are configured, and time synchronization information is set for electronic price tag A, electronic price tag B and electronic price tag C as current time: X hours, X minutes, X seconds. A picture Z to be displayed of the electronic price tag group is acquired, and location information of electronic price tag A, electronic price tag B and electronic price tag C is acquired, with the location information of electronic price tag A being 0.5 meter, the location information of electronic price tag B being 1 meter, and the location information of electronic price tag C being 1.5 meters. In this way, contents to be displayed of electronic price tag A, electronic price tag B and electronic price tag C are determined, with the content to be displayed of electronic price tag A being a picture M1, the content to be displayed of electronic price tag B being a picture M2, and the content to be displayed of electronic price tag C being a picture M3. That is, the picture Z is divided into picture M1, picture M2, and picture M3.

In the embodiment of this specification, the overall display content to be presented by the electronic price tag group is determined, and content to be displayed of each electronic price tag is determined according to location information of the electronic price tag, thereby achieving the overall display effect of the electronic price tag group and improving the efficiency of the electronic price tag group.

At step 206, determining a preset display mode of the electronic price tag group, and determining a target display moment of the first electronic price tag according to the preset display mode and location information of the first electronic price tag.

The preset display mode may be reverse display, scrolling, zooming, rotating, and other display modes. The target display moment may be a moment when a display state of the electronic price tag changes, such as 0.5 second.

In practical applications, it is required to determine time when a display state change should occur in each electronic price tag according to the set mode.

For example, a first guide rail is configured on a shelf, on which an electronic price tag A, an electronic price tag B and an electronic price tag C are configured, and time synchronization information is set for electronic price tag A, electronic price tag B and electronic price tag C as current time: X hours, X minutes, X seconds. Furthermore, contents to be displayed of electronic price tag A, electronic price tag B and electronic price tag C are acquired, with the content to be displayed of electronic price tag A being a picture M1, the content to be displayed of electronic price tag B being a picture M2, and the content to be displayed of electronic price tag C being a picture M3. Location information of electronic price tag A, electronic price tag B and electronic price tag C is acquired, with the location information of electronic price tag A being 0.5 meter, the location information of electronic price tag B being 1 meter, and the location information of electronic price tag C being 1.5 meters. A display mode is to perform display by scrolling from electronic price tag A to electronic price tag B, and then it can be determined, according to the location information of electronic price tag A, electronic price tag B and electronic price tag C, that electronic price tag A displays picture M1 at time T1, electronic price tag B displays picture M2 at time T2, and electronic price tag C displays picture M3 at time T3.

In the embodiment of this specification, a moment when a display state change should occur in each electronic price tag can be determined according to the location information, such that when an effect presentation is required, the display state change can occur according to the corresponding moment of the electronic price tag, so as to make the electronic price tag group to achieve a corresponding screen effect.

In an embodiment, in the case where there is only one guide rail that needs to perform presentation, determining the target moment is specifically implemented as below.

In an implementable manner, determining the target display moment of the first electronic price tag according to the preset display mode and the location information of the first electronic price tag includes: determining a target electronic price tag and an effect update speed according to the preset display mode, wherein the target electronic price tag is an electronic price tag in the electronic price tag group that first changes; determining a content update distance according to location information of the first electronic price tag and location information of the target electronic price tag; and determining a target display moment of the first electronic price tag according to the content update distance and the effect update speed.

In an embodiment, the target electronic price tag may be a first one electronic price tag on the guide rail where a display state change occurs, and the effect update speed may be an overall effect update speed of the electronic price tag group. For example, the display state change is performed on the first guide rail at 1 meter per second. The content update distance may be understood as a distance between the target electronic price tag and the first electronic price tag.

In practical applications, a distance between the target electronic price tag and the first electronic price tag can be determined by location information of the target electronic price tag and location information of the first electronic price tag, and next a moment when the first electronic price tag should display the content to be displayed can be determined by the effect update speed set in advance and the distance between the target electronic price tag and the first electronic price tag.

For example, a first guide rail is configured on a shelf, on which an electronic price tag A, an electronic price tag B and an electronic price tag C are configured, and time synchronization information is set for electronic price tag A, electronic price tag B and electronic price tag C as current time: X hours, X minutes, X seconds. Furthermore, contents to be displayed of electronic price tag A, electronic price tag B and electronic price tag C are acquired, with the content to be displayed of electronic price tag A being a picture M1, the content to be displayed of electronic price tag B being a picture M2, and the content to be displayed of electronic price tag C being a picture M3. Location information of electronic price tag A, electronic price tag B and electronic price tag C is acquired, with the location information of electronic price tag A being 0.5 meter, the location information of electronic price tag B being 1 meter, and the location information of electronic price tag C being 1.5 meters. A display mode is to perform display by scrolling from electronic price tag A to electronic price tag B at a speed of 0.5 meter per second, that is, the target electronic price tag is electronic price tag A. Then, according to the location information of electronic price tag A, electronic price tag B and electronic price tag C, it can be determined that electronic price tag A displays picture M1 at 0 second, electronic price tag B displays picture M2 at a moment of 1 second, and electronic price tag C displays picture M3 at a moment of 2 seconds.

In the embodiment of this specification, the display moment of the first electronic price tag can be determined by the location information and the display mode, such that screen switching is performed at the display moment of the first electronic price tag, thereby achieving the corresponding overall display effect of the electronic price tag group.

In some cases, electronic price tags in both ends of a guide rail may start to change in display state simultaneously, and then determining the target display moment of the first electronic price tag is specifically implemented as below.

In an implementable manner, the number of the target electronic price tag is at least two.

Determining the target display moment of the first electronic price tag according to the preset display mode and the location information of the first electronic price tag includes: determining at least two target electronic price tags and an effect update speed according to the preset display mode, wherein the target electronic price tags are an electronic price tag in the electronic price tag group that first changes; determining at least two content update distances according to location information of the first electronic price tag and location information of the at least two target electronic price tags; determining at least two initial display moments of the first electronic price tag according to the at least two content update distances and the effect update speed; and determining a target display moment from the at least two initial display moments according to the preset display mode according to the preset display mode.

In practical applications, if electronic price tags at both ends of a guide rail start to change in display state simultaneously, then two target display moments of a first electronic price tag can also be calculated out, and then a moment when a display screen of the first electronic price tag needs to be switched can be determined according to the preset display mode.

For example, a first guide rail is configured on a shelf, on which an electronic price tag A, an electronic price tag B and an electronic price tag C are configured, and time synchronization information is set for electronic price tag A, electronic price tag B and electronic price tag C as current time: X hours, X minutes, X seconds. Furthermore, contents to be displayed of electronic price tag A, electronic price tag B and electronic price tag C are acquired, with the content to be displayed of electronic price tag A being a picture M1, the content to be displayed of electronic price tag B being a picture M2, and the content to be displayed of electronic price tag C being a picture M3. Location information of electronic price tag A, electronic price tag B and electronic price tag C is acquired, with the location information of electronic price tag A being 0.5 meter, the location information of electronic price tag B being 1 meter, and the location information of electronic price tag C being 1.5 meters. A display mode is to perform display by scrolling from electronic price tag A and electronic price tag C to electronic price tag B at a speed of 0.5 meter per second, that is, the target electronic price tags are electronic price tag A and electronic price tag C. Then, according to the location information of electronic price tag A, electronic price tag B and electronic price tag C, it can be determined that electronic price tag A displays picture M1 at 0 second, electronic price tag B displays picture M2 at a moment of 1 second, and electronic price tag C displays picture M3 at a moment of 0 second.

For another example, a first guide rail is configured on a shelf, on which an electronic price tag A, an electronic price tag B and an electronic price tag C are configured, and time synchronization information is set for electronic price tag A, electronic price tag B and electronic price tag C as current time: X hours, X minutes, X seconds. Furthermore, contents to be displayed of electronic price tag A, electronic price tag B and electronic price tag C are acquired, with the content to be displayed of electronic price tag A being a picture M1, the content to be displayed of electronic price tag B being a picture M2, and the content to be displayed of electronic price tag C being a picture M3. Location information of electronic price tag A, electronic price tag B and electronic price tag C is acquired, with the location information of electronic price tag A being 0.5 meter, the location information of electronic price tag B being 1 meter, and the location information of electronic price tag C being 2 meters. A display mode is to perform display by scrolling from electronic price tag A and electronic price tag C to electronic price tag B at a speed of 0.5 meter per second, that is, the target electronic price tags are electronic price tag A and electronic price tag C. Then, according to the location information of electronic price tag A, electronic price tag B and electronic price tag C, it can be determined that electronic price tag A displays picture M1 at 0 second, electronic price tag B displays picture M2 at a moment of 1 second, electronic price tag C displays picture M3 at a moment of 0 second, and electronic price tag B displays picture M2 at a moment of 2 seconds. A target display moment can be selected according to the moments of 1 second and 2 seconds corresponding to electronic price tag B.

According to the above examples, there may be the following display modes, including a first display mode and a second display mode, which is specifically implemented as below.

In an embodiment, determining the target display moment from the at least two initial display moments according to the preset display mode includes: determining a moment sequence of the at least two initial display moments in the case where the preset display mode is a first display mode; and determining a target display moment from the at least two initial display moments according to the moment sequence according to the preset display mode.

The moment sequence may be a sequence on the basis of the length of time. For example, if it includes two moments of 0.3 second and 0.5 second, then a moment sequence of 0.3, 0.5 can be obtained by sorting them from small to large.

In practical applications, a moment shortest in time can be selected for display, thereby achieving the effect of gathering from both sides to the middle.

For example, content to be displayed of an electronic price tag A is a picture M1, content to be displayed of an electronic price tag B is a picture M2, and content to be displayed of an electronic price tag C is a picture M3. Location information of electronic price tag A, electronic price tag B and electronic price tag C is acquired, with the location information of electronic price tag A being 0.5 meter, the location information of electronic price tag B being 1 meter, and the location information of electronic price tag C being 2 meters. A display mode is to perform display by scrolling from electronic price tag A and electronic price tag C to electronic price tag B at a speed of 0.5 meter per second, that is, the target electronic price tags are electronic price tag A and electronic price tag C. Then, according to the location information of electronic price tag A, electronic price tag B and electronic price tag C, it can be determined that electronic price tag A displays picture M1 at 0 second, electronic price tag B displays picture M2 at a moment of 1 second, electronic price tag C displays picture M3 at a moment of 0 second, and electronic price tag B displays picture M2 at a moment of 2 seconds. A target display moment can be determined to be 1 second according to sorting of the moments of 1 second and 2 seconds corresponding to electronic price tag B from small to large.

In the embodiment of this specification, different ways to display can be selected through the preset mode, thereby achieving different display effects, improving the functionality of the electronic price tags, and enriching the effect of the electronic price tags.

Also, switching of a display state can be selected according to moments calculated out for all the target electronic price tags, which is specifically implemented as below.

In an embodiment, determining the target display moment from the at least two initial display moments according to the preset display mode includes: taking the at least two initial display moments as at least two target moments of the first electronic price tag in the case where the preset display mode is a second display mode.

In practical applications, all target display moments can be selected for display, thereby achieving the effect of crossing two sides to the middle.

Following the above example, according to the location information of electronic price tag A, electronic price tag B and electronic price tag C, it can be determined that electronic price tag A displays picture M1 at 0 second, electronic price tag B displays picture M2 at the moment of 1 second, electronic price tag C displays picture M3 at the moment of 0 second, and electronic price tag B displays picture M2 at the moment of 2 seconds. The moments of 1 second and 2 seconds corresponding to electronic price tag B can be both determined as the target display moment.

In the embodiment of this specification, different ways to display are selected through the preset mode, thereby achieving different display effects, and enriching the effect of the electronic price tags.

In an embodiment, an in-plane display effect can also be achieved by electronic price tags on a plurality of guide rails, or a three-dimensional display effect can be achieved by electronic price tags on a plurality of guide rails in different planes, which are specifically implemented as below.

In an implementable manner, determining the target display moment of the first electronic price tag according to the preset display mode and the location information of the first electronic price tag includes: determining a target electronic price tag and an effect update speed according to the preset display mode, wherein the target electronic price tag is an electronic price tag in the electronic price tag group that first changes; determining a content update distance according to location information of the first electronic price tag and location information of the target electronic price tag; and determining a target display moment of the first electronic price tag according to the content update distance and the effect update speed.

For example, if it is desired to present the effect of heart-shaped convergence to the middle, a corresponding effect update speed can be first determined for each guide rail in a plane, as well as a corresponding electronic price tag on the guide rail that first starts to switch display content. Thus, a target display moment of the electronic price tag on each guide rail can be calculated separately. The target display moment of the electronic price tag on the guide rail is calculated in the same manner as that described in the above embodiment, which will not be repeated here.

It should be noted that a variety of display effects may be customized by the method in the embodiment of this specification, which is not defined in the embodiment of this specification. For example, referring to FIG. 2C, which is a diagram of a display effect change of an electronic price tag in the method for displaying an electronic price tag provided in an embodiment of this specification, the electronic price tag itself has a display effect of black characters on a white background, which can be converted to a display effect of white characters on a black background.

At step 208: displaying the content to be displayed of the first electronic price tag at the target display moment on the basis of the time synchronization information.

In practical applications, when effect presentation is required, all electronic price tags can be triggered to display contents to be displayed at corresponding target display moments, so as to achieve a linked animation or video effect.

For example, a first guide rail is configured on a shelf, on which an electronic price tag A, an electronic price tag B and an electronic price tag C are configured, and time synchronization information is set for electronic price tag A, electronic price tag B and electronic price tag C as current time: X hours, X minutes, X seconds. Furthermore, contents to be displayed of electronic price tag A, electronic price tag B and electronic price tag C are acquired, with the content to be displayed of electronic price tag A being a picture M1, the content to be displayed of electronic price tag B being a picture M2, and the content to be displayed of electronic price tag C being a picture M3. Location information of electronic price tag A, electronic price tag B and electronic price tag C is acquired, with the location information of electronic price tag A being 0.5 meter, the location information of electronic price tag B being 1 meter, and the location information of electronic price tag C being 1.5 meters. A display mode is to perform display by scrolling from electronic price tag A and electronic price tag C to electronic price tag B at a speed of 0.5 meter per second, that is, the target electronic price tags are electronic price tag A and electronic price tag C. Then, according to the location information of electronic price tag A, electronic price tag B and electronic price tag C, it can be determined that electronic price tag A displays picture M1 at 0 second, electronic price tag B displays picture M2 at a moment of 1 second, and electronic price tag C displays picture M3 at a moment of 0 second. It can be set to present an effect of convergence to the middle at 2: 00 p.m. every day, and then corresponding pictures will be displayed at 2: 00 p.m. every day according to the target display moments of electronic price tag A, electronic price tag B and electronic price tag C.

In the embodiment of this specification, effect presentation is performed at a certain set moment on the basis of a target display moment of each electronic price tag, which improves the functionality of the electronic price tags and increases the attractiveness to customers.

In an implementable manner, displaying the content to be displayed of the first electronic price tag at the target display moment on the basis of the time synchronization information includes: determining, in response to a display mode change instruction, a mode change start time of a guide rail where the first electronic price tag is located on the basis of the time synchronization information; and displaying the content to be displayed of the first electronic price tag on the basis of the mode change start time in the case where the target display moment is reached.

In an embodiment, the display mode change instruction may be understood as an instruction to start effect presentation. The mode change start time may be a time when the target electronic price tag performs display conversion.

Following the above example, a display mode is to perform display by scrolling from electronic price tag A and electronic price tag C to electronic price tag B at the speed of 0.5 meter per second, that is, the target electronic price tags are electronic price tag A and electronic price tag C. Then, according to the location information of electronic price tag A, electronic price tag B and electronic price tag C, it can be determined that electronic price tag A displays picture M1 at 0 second, electronic price tag B displays picture M2 at the moment of 1 second, and electronic price tag C displays picture M3 at the moment of 0 second. It can be set to present an effect of convergence to the middle at 2: 00 p.m. every day, and then electronic price tag A displays picture M1, and electronic price tag C displays picture M3 at 2: 00 p.m. every day, and electronic price tag B displays picture M2 at 2: 00: 01.

In some embodiments, the content to be displayed may include a plurality of display contents, and then other display contents may be cyclically played after the electronic price tag switches the display contents, which is specifically implemented as below.

In an implementable manner, the content to be displayed is a collection of contents to be displayed including at least two display contents.

Displaying the content to be displayed of the first electronic price tag at the target display moment on the basis of the time synchronization information includes: determining, in response to a play instruction, a mode change start time of a guide rail where the first electronic price tag is located on the basis of the time synchronization information; displaying a first display content of the first electronic price tag on the basis of the mode change start time in the case where the target display moment is reached, wherein the first display content is one of the display contents in the collection of contents to be displayed; and switching the first display content to other display content according to a preset display cycle, wherein the other display content is a display content in the collection of contents to be displayed other than the first display content.

In practical applications, after effect presentation, a plurality of advertisement pictures may be cyclically played in an electronic price tag.

Following the above example, electronic price tag A displays picture M1, and electronic price tag C displays picture M3 at 2: 00 p.m. every day, and electronic price tag B displays picture M2 at 2: 00: 01. Afterwards, electronic price tag A, electronic price tag B and electronic price tag C perform picture switching once every ten seconds, so as to present more pictures.

The embodiments of this specification provide a method and apparatus for displaying an electronic price tag. The method for displaying an electronic price tag includes: setting time synchronization information for an electronic price tag group, and acquiring location information of at least two electronic price tags; determining target display content of the at least two electronic price tags, and determining content to be displayed of a first electronic price tag according to the target display content and the location information, wherein the first electronic price tag is any electronic price tag in the electronic price tag group; determining a preset display mode of the electronic price tag group, and determining a target display moment of the first electronic price tag according to the preset display mode and the location information; and displaying the content to be displayed of the first electronic price tag at the target display moment on the basis of the time synchronization information. By determining a display mode of an electronic price tag group and location information of each electronic price tag in the electronic price tag group, a target display moment of content to be displayed of each electronic price tag can be obtained, and corresponding display content of the electronic price tag can be displayed at the target display moment, such that at least two electronic price tags can achieve a linkage effect, thereby improving the functionality of the electronic price tags.

A method for displaying an electronic price tag provided in this specification will be further explained below in conjunction with FIG. 3 by taking as an example the application of the method for displaying an electronic price tag in a supermarket or a store. FIG. 3 shows a flow chart of a processing process of a method for displaying an electronic price tag provided in an embodiment of this specification, which specifically includes the following steps.

At step 302: setting time synchronization information for the electronic price tag group, and acquiring content to be displayed and location information of a target commodity electronic price tag; at step 304: determining a preset display mode of the electronic price tag group, and determining a target display moment of the target commodity electronic price tag according to the preset display mode and location information of the first electronic price tag; and at step 306: displaying the content to be displayed of the target commodity electronic price tag at the target display moment on the basis of the time synchronization information.

In an implementable manner, a first guide rail is configured on a shelf of a supermarket or a store, on which a chocolate electronic price tag, a soda electronic price tag, and a fruit electronic price tag are configured, and time synchronization information is set for the chocolate electronic price tag, the soda electronic price tag and the fruit electronic price tag as current time: X hours, X minutes, X seconds. Furthermore, contents to be displayed of the chocolate electronic price tag, the soda electronic price tag and the fruit electronic price tag are acquired, with the content to be displayed of the chocolate electronic price tag being a picture M1, the content to be displayed of the soda electronic price tag being a picture M2, and the content to be displayed of the fruit electronic price tag being a picture M3. Location information of the chocolate electronic price tag, the soda electronic price tag and the fruit electronic price tag is acquired, with the location information of the chocolate electronic price tag being 0.5 meter, the location information of the soda electronic price tag being 1 meter, and the location information of the fruit electronic price tag being 1.5 meters. A display mode is to perform display by scrolling from the chocolate electronic price tag and the fruit electronic price tag to the soda electronic price tag at a speed of 0.5 meter per second, that is, the target electronic price tags are the chocolate electronic price tag and the fruit electronic price tag. Then, according to the location information of the chocolate electronic price tag, the soda electronic price tag and the fruit electronic price tag, it can be determined that the chocolate electronic price tag displays picture M1 at 0 second, the soda electronic price tag displays picture M2 at 1 second, and the fruit electronic price tag displays picture M3 at a moment of 0 second.

In the method for displaying an electronic price tag of the embodiment of this specification, by determining a display mode of the electronic price tag group and location information of each electronic price tag in the electronic price tag group, a target display moment of content to be displayed of each electronic price tag can be obtained, and corresponding display content of the electronic price tag can be displayed at the target display moment, such that at least two electronic price tags can achieve a linkage effect, thereby improving the functionality of the electronic price tags.

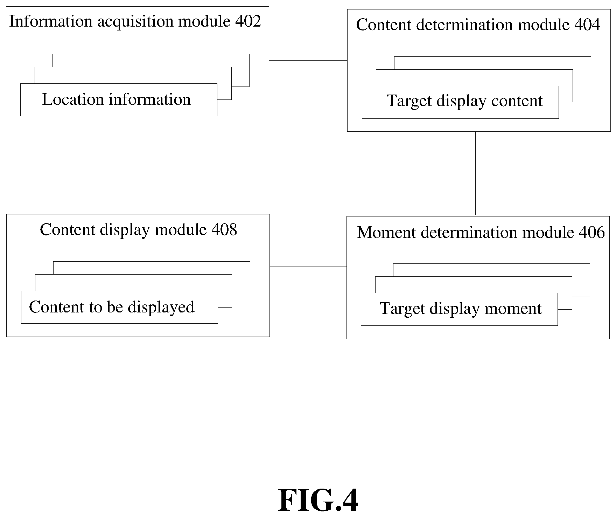

Corresponding to the above method embodiments, this specification further provides an embodiment of an apparatus for displaying an electronic price tag. FIG. 4 shows a schematic structural diagram of an apparatus for displaying an electronic price tag provided in an embodiment of this specification. As shown in FIG. 4, this apparatus is applied to an electronic price tag group including at least two electronic price tags, which includes: an information acquisition module 402 configured to set time synchronization information for the electronic price tag group, and acquire content to be displayed and location information of a first electronic price tag, wherein the first electronic price tag is any electronic price tag in the electronic price tag group; a content determination module 404 configured to determine target display content of the at least two electronic price tags, and determine the content to be displayed of a first electronic price tag according to the target display content and the location information, wherein the first electronic price tag is any electronic price tag in the electronic price tag group; a moment determination module 406 configured to determine a preset display mode of the electronic price tag group, and determine a target display moment of the first electronic price tag according to the preset display mode and location information of the first electronic price tag; and a content display module 408 configured to display the content to be displayed of the first electronic price tag at the target display moment on the basis of the time synchronization information.

In an implementable manner, the moment determination module 404 is further configured to: determine a target electronic price tag and an effect update speed according to the preset display mode, wherein the target electronic price tag is an electronic price tag in the electronic price tag group that first changes; determine a content update distance according to location information of the first electronic price tag and location information of the target electronic price tag; and determine a target display moment of the first electronic price tag according to the content update distance and the effect update speed.

In an implementable manner, the moment determination module 404 is further configured in such a manner that: the number of the target electronic price tag is at least two; and determining the target display moment of the first electronic price tag according to the preset display mode and the location information of the first electronic price tag includes: determining at least two target electronic price tags and an effect update speed according to the preset display mode, wherein the target electronic price tags are an electronic price tag in the electronic price tag group that first changes; determining at least two content update distances according to location information of the first electronic price tag and location information of the at least two target electronic price tags; determining at least two initial display moments of the first electronic price tag according to the at least two content update distances and the effect update speed; and determining a target display moment from the at least two initial display moments according to the preset display mode according to the preset display mode.

In an implementable manner, the moment determination module 404 is further configured to: determine a moment sequence of the at least two initial display moments in the case where the preset display mode is a first display mode; and determine a target display moment from the at least two initial display moments according to the moment sequence according to the preset display mode.

In an implementable manner, the moment determination module 404 is further configured to: take the at least two initial display moments as at least two target moments of the first electronic price tag in the case where the preset display mode is a second display mode.

In an implementable manner, the moment determination module 404 is further configured to: determine a first guide rail where the first electronic price tag is located according to the preset display mode, and determine a target electronic price tag and an effect update speed corresponding to the guide rail, wherein the target electronic price tag is an electronic price tag in the electronic price tag group that first changes; determine a content update distance according to location information of the first electronic price tag and location information of the target electronic price tag; and determine a target display moment of the first electronic price tag according to the content update distance and the effect update speed.

In an implementable manner, the information acquisition module 402 is further configured to: acquire a target voltage value of the first electronic price tag, wherein the target voltage value is a voltage value of the first electronic price tag on a guide rail; and determine location information of the first electronic price tag according to an initial voltage value and the target voltage value, wherein the initial voltage value is a voltage value applied to the guide rail.

In an implementable manner, the content display module 406 is further configured to: determine, in response to a display mode change instruction, a mode change start time of a guide rail where the first electronic price tag is located on the basis of the time synchronization information; and display the content to be displayed of the first electronic price tag on the basis of the mode change start time in the case where the target display moment is reached.

In an implementable manner, the content displaying module 406 is further configured in such a manner that: displaying the content to be displayed of the first electronic price tag at the target display moment on the basis of the time synchronization information includes: determining, in response to a play instruction, a mode change start time of a guide rail where the first electronic price tag is located on the basis of the time synchronization information; displaying a first display content of the first electronic price tag on the basis of the mode change start time in the case where the target display moment is reached, wherein the first display content is one of the display contents in the collection of contents to be displayed; and switching the first display content to other display content according to a preset display cycle, wherein the other display content is a display content in the collection of contents to be displayed other than the first display content.

In an implementable manner, the information acquisition module 402 is further configured to: receive time broadcast data, and acquire time information from the time broadcast data; and set time synchronization information for the electronic price tag group according to the time information.

In an implementable manner, the information acquisition module 402 is further configured to: determine a time difference according to the time information and the time synchronization information, and set the time information as time synchronization information of the electronic price tag group in the case where the time difference is greater than or equal to a preset threshold.

The embodiments of this specification provide a method and apparatus for displaying an electronic price tag. The apparats for displaying an electronic price tag display device includes: setting time synchronization information for an electronic price tag group, and acquiring location information of at least two electronic price tags; determining target display content of the at least two electronic price tags, and determining content to be displayed of a first electronic price tag according to the target display content and the location information, wherein the first electronic price tag is any electronic price tag in the electronic price tag group; determining a preset display mode of the electronic price tag group, and determining a target display moment of the first electronic price tag according to the preset display mode and the location information; and displaying the content to be displayed of the first electronic price tag at the target display moment on the basis of the time synchronization information. By determining a display mode of an electronic price tag group and location information of each electronic price tag in the electronic price tag group, a target display moment of content to be displayed of each electronic price tag can be obtained, and corresponding display content of the electronic price tag can be displayed at the target display moment, such that at least two electronic price tags can achieve a linkage effect, thereby improving the functionality of the electronic price tags.

Described above is a schematic solution of the apparatus for displaying an electronic price tag of this embodiment. It should be explained that the technical solution of this apparatus for displaying an electronic price tag and the technical solution of the above method for displaying an electronic price tag belong to one and the same concept. For details not described in detail in the technical solution of the apparatus for displaying an electronic price tag, reference may be made to the description of the technical solution of the above method for displaying an electronic price tag.

The embodiments of this specification provide a method and apparatus for displaying an electronic price tag. The method for displaying an electronic price tag includes: setting time synchronization information for an electronic price tag group, and acquiring location information of at least two electronic price tags; determining target display content of the at least two electronic price tags, and determining content to be displayed of a first electronic price tag according to the target display content and the location information, wherein the first electronic price tag is any electronic price tag in the electronic price tag group; determining a preset display mode of the electronic price tag group, and determining a target display moment of the first electronic price tag according to the preset display mode and the location information; and displaying the content to be displayed of the first electronic price tag at the target display moment on the basis of the time synchronization information. By determining a display mode of an electronic price tag group and location information of each electronic price tag in the electronic price tag group, a target display moment of content to be displayed of each electronic price tag can be obtained, and corresponding display content of the electronic price tag can be displayed at the target display moment, such that at least two electronic price tags can achieve a linkage effect, thereby improving the functionality of the electronic price tags.

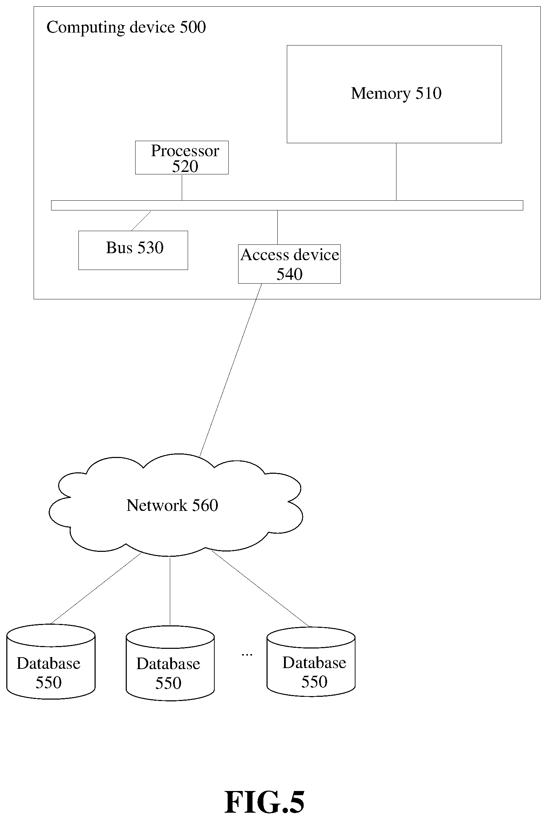

FIG. 5 shows a structural block diagram of a computing device 500 provided in an embodiment of this specification. Parts of this computing device 500 include, but are not limited to, a memory 510 and a processor 520. The processor 520 is connected with the memory 510 through a bus 530, and a database 550 is used to store data.

The computing device 500 further includes an access device 540 that enables the computing device 500 to communicate via one or more networks 560. Examples of these networks include a public switched telephone network (PSTN), a local area network (LAN), a wide area network (WAN), a personal area network (PAN), or a combination of communication networks such as the Internet. The access device 540 may include one or more of any types of wired or wireless network interfaces (e.g., a network interface controller (NIC)), such as an IEEE 802.11 wireless local area network (WLAN) wireless interface, a worldwide interoperability for microwave access (Wi-MAX) interface, an Ethernet interface, a universal serial bus (USB) interface, a cellular network interface, a Bluetooth interface, and a near field communication (NFC) interface.

In an embodiment of this specification, the above parts of the computing device 500 and other parts not shown in FIG. 5 may also be connected to each other through, for example, a bus. It should be understood that the structural block diagram of the computing device shown in FIG. 5 is for exemplary purposes only, rather than limiting the scope of this specification. Those skilled in the art can add or replace other parts as needed.

The computing device 500 may be any type of stationary or mobile computing device, including a mobile computer or mobile computing device (e.g., a tablet computer, a personal digital assistant, a laptop computer, a notebook computer, a netbook, etc.), a mobile phone (e.g., a smartphone), a wearable computing device (e.g., a smart watch, smart glasses, etc.), or other types of mobile devices, or a stationary computing device such as a desktop computer or a personal computer (PC). The computing device 500 may also be a mobile or stationary server.

The processor 520 is used for executing computer-executable instructions that, when executed by the processor, implement the steps of the above data processing method. Described above is a schematic solution of the computing device in this embodiment. It should be explained that the technical solution of this computing device and the technical solution of the above method for displaying an electronic price tag belong to one and the same concept. For details not described in detail in the technical solution of the computing device, reference may be made to the description of the technical solution of the above method for displaying an electronic price tag.

An embodiment of this specification further provides a computer-readable storage medium, which stores computer-executable instructions that, when executed by a processor, implement the steps of the above method for displaying an electronic price tag.

Described above is a schematic solution of the computer-readable storage medium in this embodiment. It should be explained that the technical solution of this storage medium and the technical solution of the above method for displaying an electronic price tag belong to one and the same concept. For details not described in detail in the technical solution of the storage medium, reference may be made to the description of the technical solution of the above method for displaying an electronic price tag.

An embodiment of this specification further provides a computer program, wherein the computer program, when executed in a computer, causes the computer to execute the steps of the above method for displaying an electronic price tag.

Described above is a schematic solution of the computer program in this embodiment. It should be explained that the technical solution of this computer program and the technical solution of the above method for displaying an electronic price tag belong to one and the same concept. For details not described in detail in the technical solution of the computer program, reference may be made to the description of the technical solution of the above method for displaying an electronic price tag.

Particular embodiments of this specification have been described above. Other embodiments are within the scope of the appended claims. In some cases, actions or steps recorded in the claims may be executed in a different order from those in the embodiments, and may still achieve desired results. Additionally, processes depicted in the drawings do not necessarily require a particular or consecutive order as shown to achieve desired results. In certain implementations, multitasking and parallel processing are also possible or may be advantageous.

The computer instructions include computer program codes, which may be in a source code form, an object code form, an executable file, or some intermediate forms. The computer-readable medium may include: any entity or apparatus capable of carrying the computer program codes, a recording medium, a USB flash drive, a portable hard drive, a magnetic disc, an optical disc, a computer memory, a read-only memory (ROM), a random-access memory (RAM), an electrical carrier signal, a telecommunications signal, and a software distribution medium. It should be noted that content contained in the computer-readable medium may be appropriately increased or decreased according to the requirements of legislation and patent practice in a jurisdiction. For example, in some jurisdictions, according to legislation and patent practice, a computer-readable medium does not include an electrical carrier signal or a telecommunication signal.

It should be noted that for the convenience of description, the method embodiments described precedingly are all expressed as combinations of a series of actions. However, those skilled in the art should be aware that the embodiments of this specification are not limited by the described action orders, because according to the embodiments of this specification, certain steps may proceed in other sequences or at the same time. Furthermore, those skilled in the art should also be aware that the embodiments described in the specification are all preferred embodiments, and the actions and modules involved are not all definitely necessary for the embodiments of this specification.

In the above embodiments, different focuses are put on their respective descriptions. For parts not detailed in a certain embodiment, reference may be made to the relevant descriptions of other embodiments.

The preferred embodiments of this specification as disclosed above are merely used to help elaborate this specification. The optional embodiments neither exhaustively recite all the details, nor limit the invention to the specific implementations as described. Obviously, according to the content of the embodiments of this specification, many modifications and variations may be conducted. These embodiments are selected and specifically described in this specification in order to better explain the principles and practical applications of the embodiments of this specification, such that those skilled in the art can well understand and utilize this specification. This specification is limited only by the claims and their entire scope and equivalents.

## Claims

1. A method for displaying an electronic price tag, applied to an electronic price tag group comprising at least two electronic price tags, the method comprising:
setting time synchronization information for the electronic price tag group, and acquiring location information of the at least two electronic price tags;
determining target display content of the at least two electronic price tags, and determining content to be displayed of a first electronic price tag according to the target display content and the location information, wherein the first electronic price tag is any electronic price tag in the electronic price tag group;
determining a preset display mode of the electronic price tag group, and determining a target display moment of the first electronic price tag according to the preset display mode and location information of the first electronic price tag; and
displaying the content to be displayed of the first electronic price tag at the target display moment on the basis of the time synchronization information.

2. The method according to claim 1, wherein determining the target display moment of the first electronic price tag according to the preset display mode and the location information of the first electronic price tag comprises:
determining a target electronic price tag and an effect update speed according to the preset display mode, wherein the target electronic price tag is an electronic price tag in the electronic price tag group that first changes;
determining a content update distance according to the location information of the first electronic price tag and location information of the target electronic price tag; and
determining the target display moment of the first electronic price tag according to the content update distance and the effect update speed.

3. The method according to claim 1, wherein the number of the target electronic price tag is at least two; and
determining the target display moment of the first electronic price tag according to the preset display mode and the location information of the first electronic price tag comprises:
determining at least two target electronic price tags and an effect update speed according to the preset display mode, wherein the target electronic price tags are an electronic price tag in the electronic price tag group that first changes;
determining at least two content update distances according to the location information of the first electronic price tag and location information of the at least two target electronic price tags;
determining at least two initial display moments of the first electronic price tag according to the at least two content update distances and the effect update speed; and
determining the target display moment from the at least two initial display moments according to the preset display mode according to the preset display mode.

4. The method according to claim 3, wherein determining the target display moment from the at least two initial display moments according to the preset display mode comprises:
determining a moment sequence of the at least two initial display moments in the case where the preset display mode is a first display mode; and
determining the target display moment from the at least two initial display moments according to the moment sequence according to the preset display mode.

5. The method according to claim 3, wherein determining the target display moment from the at least two initial display moments according to the preset display mode comprises:
taking the at least two initial display moments as at least two target moments of the first electronic price tag in the case where the preset display mode is a second display mode.

6. The method according to claim 1, wherein determining the target display moment of the first electronic price tag according to the preset display mode and the location information of the first electronic price tag comprises:
determining a first guide rail where the first electronic price tag is located according to the preset display mode, and determining a target electronic price tag and an effect update speed corresponding to the guide rail, wherein the target electronic price tag is an electronic price tag in the electronic price tag group that first changes;
determining a content update distance according to the location information of the first electronic price tag and location information of the target electronic price tag; and
determining the target display moment of the first electronic price tag according to the content update distance and the effect update speed.

7. The method according to claim 1, prior to acquiring the location information of the at least two electronic price tags, comprising:
acquiring a target voltage value of the first electronic price tag, wherein the target voltage value is a voltage value of the first electronic price tag on a guide rail; and
determining the location information of the first electronic price tag according to an initial voltage value and the target voltage value, wherein the initial voltage value is a voltage value applied to the guide rail.

8. The method according to claim 1, wherein displaying the content to be displayed of the first electronic price tag at the target display moment on the basis of the time synchronization information comprises:
determining, in response to a display mode change instruction, a mode change start time of a guide rail where the first electronic price tag is located on the basis of the time synchronization information;
displaying the content to be displayed of the first electronic price tag on the basis of the mode change start time in the case where the target display moment is reached.

9. The method according to claim 1, wherein the content to be displayed is a collection of contents to be displayed comprising at least two display contents; and
displaying the content to be displayed of the first electronic price tag at the target display moment on the basis of the time synchronization information comprises:
determining, in response to a play instruction, a mode change start time of a guide rail where the first electronic price tag is located on the basis of the time synchronization information;
displaying a first display content of the first electronic price tag on the basis of the mode change start time in the case where the target display moment is reached, wherein the first display content is one of the display contents in the collection of contents to be displayed; and
switching the first display content to other display content according to a preset display cycle, wherein the other display content is a display content in the collection of contents to be displayed other than the first display content.

10. The method according to claim 1, wherein setting the time synchronization information for the electronic price tag group comprises:
receiving time broadcast data, and acquiring time information from the time broadcast data; and
setting the time synchronization information for the electronic price tag group according to the time information.

11. The method according to claim 10, wherein setting the time synchronization information for the electronic price tag group according to the time information comprises:
determining a time difference according to the time information and the time synchronization information, and setting the time information as the time synchronization information of the electronic price tag group in the case where the time difference is greater than or equal to a preset threshold.

12. An apparatus for displaying an electronic price tag, applied to an electronic price tag group comprising at least two electronic price tags, the apparatus comprising:
an information acquisition module configured to set time synchronization information for the electronic price tag group, and acquire location information of the at least two electronic price tags;
a content determination module configured to determine target display content of the at least two electronic price tags, and determine content to be displayed of a first electronic price tag according to the target display content and the location information, wherein the first electronic price tag is any electronic price tag in the electronic price tag group;
a moment determination module configured to determine a preset display mode of the electronic price tag group, and determine a target display moment of the first electronic price tag according to the preset display mode and location information of the first electronic price tag; and
a content display module configured to display the content to be displayed of the first electronic price tag at the target display moment on the basis of the time synchronization information.

13. A computing device comprising:
a memory for storing computer-executable instructions; and
a processor for executing the computer-executable instructions that, when executed by the processor, implement the steps of the method for displaying electronic price tag as described in any one of claims 1 to 11.

14. A computer-readable storage medium, which stores computer-executable instructions that, when executed by a processor, implement the steps of the method for displaying electronic price tag as described in any one of claims 1 to 11.
